# EUROPÄISCHE PATENTANMELDUNG

(11) **EP 0 776 811 A1**
(43) Veröffentlichungstag der Anmeldung: **04.06.1997**
(21) Anmeldenummer: 96118741.6
(22) Anmeldetag: 22.11.1996
(51) Int. Cl.: B62D 1/10, F16D 1/108, F16B 21/18

(54) **Lenkradbefestigung**

(30) Priorität: 30.11.1995 DE 19544580
(71) Anmelder: MST Automotive GmbH Automobil-Sicherheitstechnik, 63743 Aschaffenburg (DE)
(72) Erfinder: Hirzmann, Guido, 53579 Erpel (DE)
(74) Vertreter: Fuchs, Luderschmidt & Partner

(57) **Zusammenfassung**

Die Erfindung betrifft Mittel zur lösbaren, formschlüssigen axialen Befestigung eines Lenkrades (1) an einer Lenksäule (2), wobei das Lenkrad (1) auf das obere Ende der Lenksäule (2) aufgesteckt und formschlüssig drehfest gehalten ist.

Als Ersatz für die herkömmliche Schraubverbindung wird eine Rastverbindung vorgeschlagen, die bei einer ersten Ausführungsform dadurch gekennzeichnet ist, daß im oberen Ende der Lenksäule (2) wenigstens zwei einander gegenüberliegende, in einer Ebene senkrecht zur Achse der Lenksäule (2) nach außen vorgespannte und um außermittig parallel zu der genannten Ebene verlaufende Achsen (4) schwenkbare Rasthaken (5) angeordnet sind und daß die Rasthaken (5) konusförmig zulaufende Außenflächen (6) aufweisen, mittels derer sie beim Aufstecken des Lenkrades (1) auf die Lenksäule (2) nach innen in eine Öffnungsstellung schwenkbar sind, aus der sie unter dem Einfluß einer Spannfeder (7) in eine Schließstellung nach außen zurückschnappen, wenn das Lenkrad (1) seine axiale Sollposition erreicht hat und die Rasthaken (5) den oberen Rand einer zentralen Ausnehmung (3) des Lenkrades (1) hintergreifen können.

## Beschreibung

Die Erfindung betrifft Mittel zur lösbaren, formschlüssigen axialen Befestigung eines Lenkrades an einer Lenksäule, wobei das Lenkrad auf das obere Ende der Lenksäule aufgesteckt und formschlüssig drehfest gehalten ist.

Die Lenkradbefestigung umfaßt im allgemeinen Mittel zur Verhinderung einer Relativdrehung zwischen Lenkrad und Lenksäule und Mittel zur axialen Festlegung des Lenkrades auf der Lenksäule. Die erstgenannten Mittel bestehen aus formschlüssig ineinandergreifenden Konstruktionselementen, wie Kerbverzahnungen und Nut-und-Feder-Verbindungen. Sie erlauben eine Montage des Lenkrades durch axiales Aufstecken oder Aufschieben, müssen aber durch Konstruktionselemente zur axialen Festlegung des Lenkrades relativ zur Lenksäule ergänzt werden. Letztere bestehen üblicherweise aus korrespondierenden Konusteilen an Lenksäule und Lenkrad sowie aus dem mit Gewinde versehenen Ende der Lenksäule, auf das eine Mutter aufgesetzt werden kann, mittels derer das Lenkrad gegen die Lenksäule unter Benutzung der Konusteile verspannt werden kann.

Diese Befestigungsmethode zur axialen Fixierung des Lenkrades weist verschiedene Nachteile auf. Da die Demontage eines Lenkrades nicht zu den Arbeiten gehört, die regelmäßig, beispielsweise bei jeder Inspektion, ausgeführt werden müssen, besteht immer die Gefahr, daß die Klemmverbindung der Konusteile nach dem Abnehmen der Mutter nicht ohne weiteres zu lösen ist, weil entweder die Mutter zu stark angezogen wurde und die beteiligten Bauteile infolge der erzeugten elastischen Verformungen zu fest aneinander haften oder durch korrosive Einflüsse zusätzliche Haftkräfte entstanden sind. Im ungünstigsten Fall wirken sich beide Einflüsse synergetisch aus, so daß das Lenkrad nur unter Anwendung erheblicher Kräfte lösbar ist.

Hinzu kommt, daß der Zugang zu einer zentral angeordneten Mutter und der Platz zum Ansetzen eines Schraubwerkzeugs bei modernen Lenkrädern immer stärker eingeschränkt wird, weil der zentrale Bereich des Lenkrades ein Airbag aufnehmen muß und zunehmend auch für die Unterbringung von Bedienungselementen gebraucht wird.

Als Hauptnachteil der herkömmlichen Methode für die axiale Fixierung des Lenkrades auf der Lenksäule wird jedoch der Montageaufwand angesehen. Zum Aufschrauben der Mutter muß der zentrale Bereich des Lenkrades zugärglich sein. Da in diesem Bereich aber auch der Airbag, zumindest aber dessen Abdeckung angeordnet werden muß, fallen nach dem Festschrauben zwangsläufig noch Folgearbeiten an, die den Zeitaufwand für die Montage vergrößern und die sich trotz vielfältiger Bemühungen bisher als unvermeidbar erwiesen haben. Selbst bei Lenkrädern ohne Airbag soll die Befestigungsmutter nicht sichtbar bleiben, so daß auch hier Folgearbeiten nicht vermeidbar sind.

Aus alledem ergibt sich die Aufgabe, zur lösbaren, axialen Befestigung eines Lenkrades an einer Lenksäule alternative Mittel bereitzustellen, mit denen die genannten Nachteile überwunden werden können. Dabei ist selbstverständlich darauf zu achten, daß die gesuchten Mittel mit vertretbarem Aufwand hergestellt werden können und im Rahmen der Kosten bleiben, die bei der herkömmlichen Befestigungsmethode anfallen.

Zur Lösung der Aufgabe wird erfindungsgemäß vorgeschlagen, daß im oberen Ende der Lenksäule wenigstens zwei einander gegenüberliegende, in einer Ebene senkrecht zur Achse der Lenksäule nach außen vorgespannte und um außermittig parallel zu der genannten Ebene verlaufende Achsen schwenkbare Basthaken angeordnet sind und daß die Rasthaken konusförmig zulaufende Außenflächen aufweisen, mittels derer sie beim Aufstecken des Lenkrades auf die Lenksäule nach innen in eine Öffnungsstellung schwenkbar sind, aus der sie unter dem Einfluß einer Spannfeder in eine Schließstellung nach außen zurückschnappen, wenn das Lenkrad seine axiale Sollposition erreicht hat und die Rasthaken den oberen Rand einer zentralen Ausnehmung des Lenkrades hintergreifen können.

Alternativ ist vorgesehen, daß das obere Ende der Lenksäule konisch zugespitzt ist und eine Hinterschneidung aufweist, sowie daß auf der Oberseite des zentralen Bereiches des Lenkrades ein Federstab befestigt ist, der eine zentrale Ausnehmung des Lenkrades sekantenartig überdeckt und der in die Hinterschneidung der Lenksäule eingreift, wem das Lenkrad auf die Lenksäule aufgesteckt ist und seine axiale Sollposition erreicht hat.

Mit den vorgeschlagenen Rastverbindungen ist die Verbindung zwischen Lenkrad und Lenksäule wesentlich schneller herzustellen und zu lösen als bei den üblichen Schraubverbindungen. Sie haben den großen Vorteil, daß die axiale Klemmwirkung durch Federn konstruktiv festgelegt werden kann und nicht mehr davon abhängig ist, ob eine Mutter mehr oder weniger fest angezogen wurde, was selbst bei Verwendung eines Drehmomentenschlüssels noch von der Sorgfalt des Monteurs abhängig ist. Diese Federn sorgen gleichzeitig dafür, daß die Bastverbindung unter Vorspannung gehalten wird und daß das Lenkrad axial gelöst ist, sobald die Rastelemente nicht mehr im Eingriff sind.

Zum Montieren genügt es, das Lenkrad winkelrichtig aufzusetzen und gegen die axial wirkenden Federn anzudrücken, um die Verbindung herzustellen. Dabei ist ein Montagezugriff auf den zentralen Verbindungsbereich nicht mehr erforderlich, so daß Lenkräder mit in diesem Bereich montierten Airbags problemlos befestigt werden können. Zur Demontage müssen nur die Bastelemente außer Eingriff gebracht werden, wozu die vorgesehenen Angriffsstellen selbstverständlich zugänglich sein müssen. Im allgemeinen muß dazu vorher ein vorhandenes Airbag abgenommen werden, was jedoch deswegen nicht besonders ins Gewicht fällt, weil Lenkraddemontagen - wie bereits erwähnt - nicht so oft erforderlich werden. Für die erfindungsgemäßen Rastverbindungen spricht neben den genannten konstruktiven und funktionellen Vorteilen insbesondere auch die Zeitersparnis bei der Montage.

Vorteilhafte Ausgestaltungen des Erfindungsgedankens sind in den Ansprüchen 2 bis 9 und 11 bis 18 beschrieben. Weitere Einzelheiten werden anhand der in den Figuren 1 bis 8 dargestellten Ausführungsbeispiele näher erläutert. Es zeigen:
- Fig. 1: einen Vertikalschnitt durch eine erste Ausführungsform mit an der Lenksäule drehbar gelagerten Rasthaken,
- Fig. 2: eine Draufsicht zu Fig. 1,
- Fig. 3: einen Vertikalschnitt durch eine zweite Ausführungsform mit am Lenkrad drehbar gelagerten Rasthaken,
- Fig. 4: eine Draufsicht zu Fig. 3,
- Fig. 5: einen Vertikalschnitt durch eine dritte Ausführungsform mit am Lenkrad befestigtem Rastelement,
- Fig. 6: eine Draufsicht zu Fig. 5,
- Fig. 7: einen Vertikalschnitt durch eine vierte Ausführungsform mit am Lenkrad befestigtem Rastelement und
- Fig. 8: eine Draufsicht zu Fig. 7.

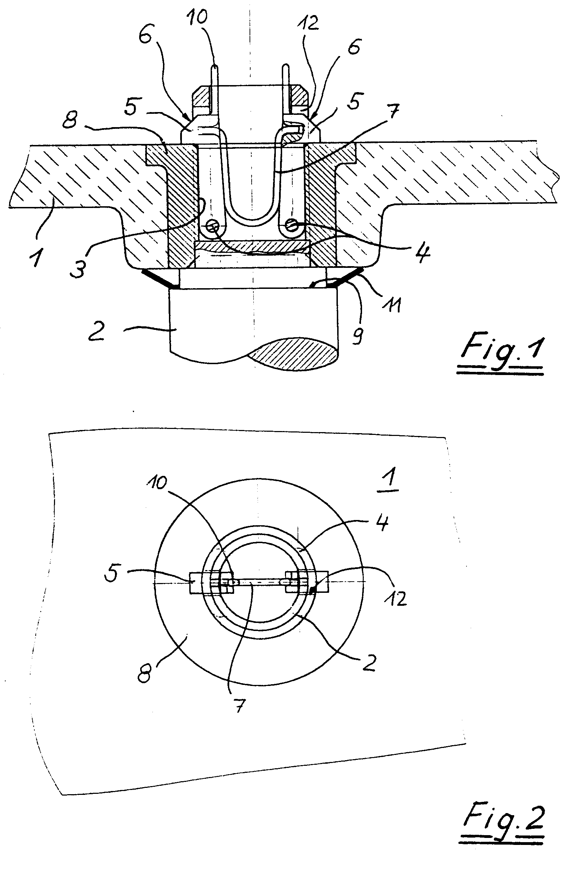

Bei dem Ausführungsbeispiel gemäß Fig. 1 und 2 sind im oberen Ende der Lenksäule 2 zwei einander gegenüberliegende Rasthaken 5 angeordnet, die in einer Ebene senkrecht zur Achse der Lenksäule 2 nach außen vorgespannt und um außermittig parallel zu der genannten Ebene verlaufende Achsen 4 schwenkbar sind. Zur Aufnahme der Rasthaken 5 weist die Lenksäule 2 gegenüberliegende nutartige Ausnehmungen 12 auf, die auch als eine über den mittleren Bereich durchgängige Ausnehmung ausgeführt werden können. Die Basthaken 5 sind mittels einer Spannfeder 7 nach außen vorgespannt und weisen konusförmig zulaufende Außenflächen 6 auf, die das Zusammendrücken der Rastlaken 5 beim Aufsetzen des Lenkrades 1 erleichtern. Außerdem sind die Rasthaken 5 noch mit nach außen vorstehenden Verlängerungen 10 ausgestattet, an denen man mit einem Werkzeug angreifen kann, um die Rasthaken gegen den Widerstand der Spannfeder 7 nach innen in eine Öffnungsstellung zu bewegen, in der die Rastverbindung gelöst wird und das Lenkrad 1 abgenommen werden kann.

Das Lenkrad 1 selbst weist eine zentrale Ausnehmung 3 auf, die von einer Buchse 8 gebildet wird, die fest mit dem Lenkrad 1 verbunden und in an sich bekannter Weise mit einer Kerbverzahnung versehen ist, die zusammen mit einer entsprechenden Ausbildung am Ende der Lenksäule 2 für die drehfeste Verbindung zwischen Lenkrad 1 und Lenksäule 2 sorgt. Alternativ kann hier auch eine ebenfalls bekannte Nut-Feder-Verbindung vorgesehen werden. Die Buchse 8 weist am unteren Ende zweckmäßigerweise eine konusförmige Abschrägung auf, die beim Aufsetzen des Lenkrades 1 auf die Lenksäule 2 mit den konusförmigen Außerflächen 6 der Rasthaken 5 zusammenwirkt und das Zusammendrücken der Rasthaken 5 erleichtert.

Zwischen Lenkrad 1 und Lenksäule 2 ist schließlich noch eine Tellerfeder 11 angeordnet, die sich an einem Bund 9 der Lenksäule 2 und gegen die Unterseite des Lenkrades 1 abstützt und dafür sorgt, daß die Rasthaken 5 ständig unter axialer Vorspannung stehen, wodurch deren Ausrasten zusätzlich gesichert ist und unter allen Betriebsbedingungen eine axiale Relativbewegung zwischen Lenkrad 1 und Lenksäule 2 verhindert wird. Die Tellerfeder 11 wird beim Aufsetzen des Lenkrades 1 auf die Lenksäule 2 gespannt, wobei das Lenkrad 1 soweit nach unten gedrückt werden muß, daß die Rasthaken 5 unter dem Einfluß der Feder 7 nach außen vorspringen und den oberen Rand der Buchse 8 hintergreifen können. Dies ergibt sich auch aus Fig. 2, die keiner weiteren Erläuterung bedarf.

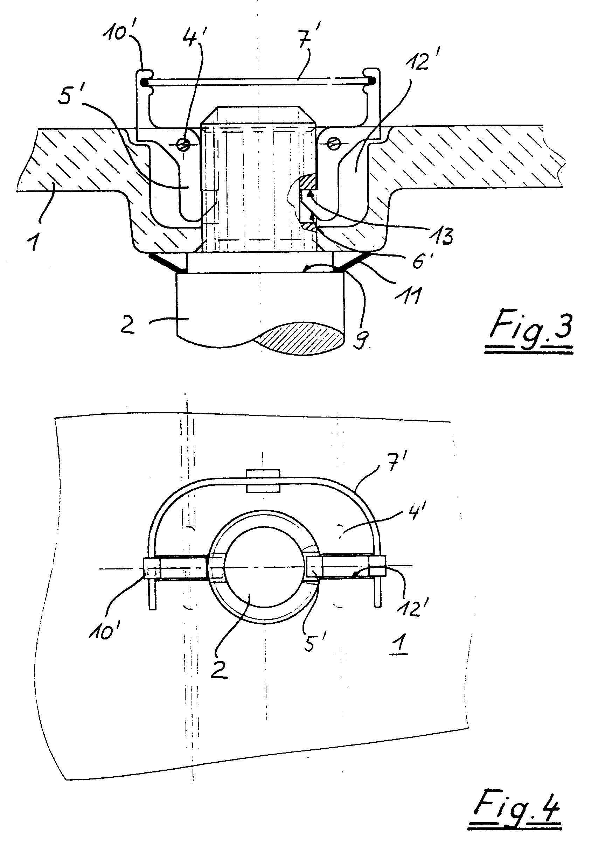

Das Ausführungsbeispiel gemäß Fig. 3 und 4 unterscheidet sich von dem zuvor beschriebenen dadurch, daß die Basthaken 5' nicht mehr in der Lenksäule 2, sondern mittels Axen 4' im Lenkrad 1 gelagert und über die Feder 7' nach außen vorgespannt sind. Die Rasthaken 5' weisen konusförmige Innenflächen 6' auf, die beim Aufstecken des Lenkrades 1 auf die Lenksäule 2 mit einer konusförmigen Zuspitzung des Endes der Lenksäule 2 zusammenwirken und das Auseinanderdrücken der Rasthaken 5' erleichtern. Die Rasthaken 5' greifen in montiertem Zustand in eine an der Lenksäule 2 ausgebildete Hinterschneidung 13 ein. Zum Demontieren kann man mittels eines geeigneten Werkzeugs die Verlängerungen 10' der Rasthaken 5' angreifen und das Ausrasten der Rasthaken 5' aus der Hinterschneidung 13 auslösen. Die Rasthaken 5' sind in Ausnehmungen 12' des Lenkrades 1 untergebracht, wobei der übrige Umfang der axialen Kontaktfläche zwischen Lenkrad 1 und Lenksäule 2 wieder als Kerbverzahnung ausgebildet ist. Auch hier kann alternativ eine Nut-Feder-Verbindung vorgesehen werden.

Die axiale Vorspannung zwischen Lenkrad 1 und Lenksäule 2 wird wiederum durch eine Tellerfeder 11 sichergestellt, die sich in einem Bund 9 der Lenksäule 2 und an der Unterseite des Lenkrades 1 abstützt. Ihre Funktion ist die gleiche wie im Ausführungsbeispiel gemäß Fig. 1 und 2.

Aus Fig. 4 ist noch die Form der Spannfeder 7' und ihre Halterung auf dem Lenkrad 1 ersichtlich. Weitere Erläuterungen sind zu Fig. 4 nicht erforderlich.

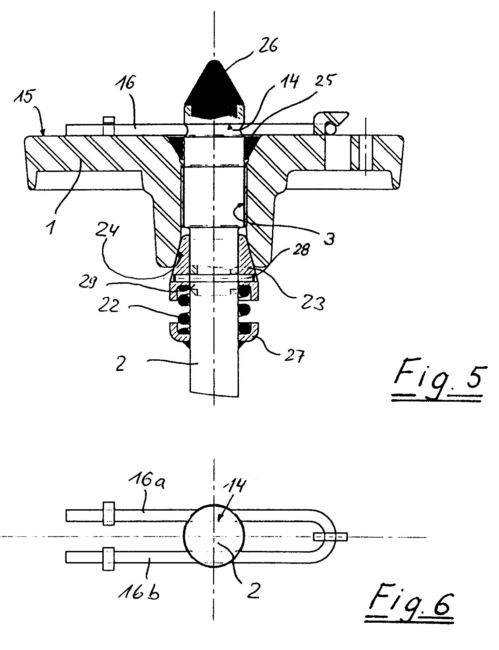

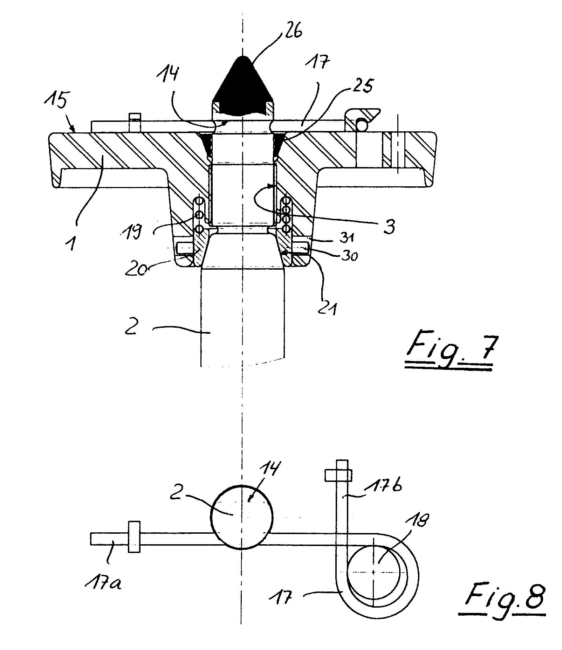

Beim Ausführungsbeispiel gemäß Fig. 5 und 6 sind die Rasthaken durch einen U-förmigen Federstab 16 ersetzt, dessen Schenkel 16a, 16b die zentrale Ausnehmung 3 des Lenkrades 1 sekantenartig überdecken und im montiertem Zustand in eine Hinterschneidung 14 der Lenksäule 2 eingreifen, womit die axiale Festlegung zwischen Lenkrad 1 und Lenksäule 2 bewirkt wird. Der U-förmige Federstab 16 ist auf der Oberseite 15 des Lenkrades 1 befestigt (siehe Fig. 2) und kann zur Demontage des Lenkrades 1 mittels eines Werkzeugs außer Eingriff gebracht werden, indem die Schenkel 16a, 16b auseinandergedrückt werden.

Die drehfeste Verbindung zwischen Lenkrad 1 und Lenksäule 2 ist wiederum durch eine Kerbverzahnung realisiert, die durch eine Nut-Feder-Verbindung ersetzt werden könnte. Das konisch zugespitzte Ende der Lenksäule 2 kann als abnehmbare Montagehilfe 26 gestaltet sein. Ein Schneidring 25 dient als zusätzliche Sicherung der Verbindung zwischen Lenkrad 1 und Lenksäule 2. Sollte die Rastverbindung brechen, treibt die Feder zur Vorspannung der Rastverbindung das Lenkrad 1 schlagartig nach oben, wodurch sich der Schneidring 25 in der Lenksäule 2 verkrallt und eine weitere Axialbewegung des Lenkrades 1 verhindert. Schneidringe haben sich für ähnliche Sicherungsfunktionen bewährt.

Die axiale Spannung zwischen Lenkrad 1 und Lenksäule 2 ist bei diesem Ausführungsbeispiel durch eine Schraubenfeder 22 realisiert, die sich einerseits auf einem Flansch 27 an der Lenksäule 2 und andererseits über einen Konusring 23 an einem Gegenkonus 24 des Lenkrades 1 abstützt. Der Konusring 23 ist mittels Langlochbohrung 29 und Stift 28 in der Lenksäule 2 axial verschieblich gehalten. Beim Aufstecken des Lenkrades 1 wird die Schraubenfeder 22 soweit zusammengedrückt, daß die Schenkel 16a, 16b des U-förmigen Federstabes 16 in die Hinterschneidung 14 der Lenksäule 2 einrasten können. Danach wird zwischen Lenkrad 1 und Lenksäule 2 eine Vorspannung aufrechterhalten, um das Ausrasten des U-förmigen Federstabes zu erschweren und unter allen Betriebsbedingungen eine axiale Relativbewegung zwischen Lenkrad 1 und Lenksäule 2 zu verhindern.

Die Ausführungsform gemäß Fig. 7 und 8 unterscheidet sich von der zuletzt beschriebenen dadurch, daß der Federstab 17 nicht U-förmig ausgebildet ist, sondern wie eine Schraubenfeder mit einer 270°-Windung um einen Befestigungsnocken 18 gelegt ist und mit einem längeren Schenkel 17a, der die Ausnehmung 3 im Lenkrad 1 sekantenartig überdeckt, sowie einem kürzeren Schenkel 17b ausgestattet ist, wobei beide Schenkel 17a und 17b endseitig am zentralen Bereich 15 des Lenkrades 1 befestigt sind (siehe Fig. 8).

Ein weiterer Unterschied besteht darin, daß der Konusring 20 mittels Stift 30 und Langloch 31 im Lenkrad 1 axial verschieblich angeordnet ist und daß der Gegenkonus 21 an der Lenkradsäule 2 ausgebildet ist. Zwischen Konusring 20 und Lenkrad 1 ist eine Schraubenfeder 19 angeordnet, deren Funktion der Schraubenfeder 22 im zuvor beschriebenen Ausführungsbeispiel entspricht. Das gilt auch für den Schneidring 25 und die Montagehilfe 26.

Damit sind vier zweckmäßige Ausführungsbeispiele des Erfindungsgedankens beschrieben, ohne daß dieser darauf beschränkt wäre. Er umfaßt vielmehr zahlreiche weitere Realisierungsmöglichkeiten als Ersatz für die herkömmliche Schraubverbindung mit den eingangs geschilderten Vorteilen.

## Patentansprüche

1. Mittel zur lösbaren, formschlüssigen axialen Befestigung eines Lenkrades (1) an einer Lenksäule (2), wobei das Lenkrad (1) auf das obere Ende der Lenksäule (2) aufgesteckt und formschlüssig drehfest gehalten ist, dadurch gekennzeichnet, daß im oberen Ende der Lenksäule (2) wenigstens zwei einander gegenüberliegende, in einer Ebene senkrecht zur Achse der Lenksäule (2) nach außen vorgespannte und um außermittig parallel zu der genannten Ebene verlaufende Achsen (4) schwenkbare Basthaken (5) angeordnet sind und daß die Rasthaken (5) konusförmig zulaufende Außenflächen (6) aufweisen, mittels derer sie beim Aufstecken des Lenkrades (1) auf die Lenksäule (2) nach innen in eine Öffnungsstellung schwenkbar sind, aus der sie unter dem Einfluß einer Spannfeder (7) in eine Schließstellung nach außen zurückschnappen, wem das Lenkrad (1) seine axiale Sollposition erreicht hat und die Rasthaken (5) den oberen Band einer zentralen Ausnehmung (3) des Lenkrades (1) hintergreifen können.

2. Mittel nach Anspruch 1, dadurch gekennzeichnet, daß die Ausnehmung (3) von einer Buchse (8) mit Nut gebildet wird, die im Lenkrad (1) fest verankert ist und deren Nut der formschlüssigen, drehfesten Verbindung mit der Lenksäule (2) dient.

3. Mittel nach Anspruch 1, dadurch gekennzeichnet, daß die Ausnehmung von einer Buchse (8) mit innerer Kerbverzahnung gebildet wird, die im Lenkrad (1) fest verankert ist und deren Kerbverzahnung der formschlüssigen, drehfesten Verbindung mit der Lenksäule (2) dient.

4. Mittel nach einem der Ansprüche 1 bis 3, dadurch gekennzeichnet, daß im oberen Ende der Lenksäule (2) gegenüberliegend nutartige Ausnehmungen (12) zur Aufnahme der Rasthaken (5) vorgesehen sind.

5. Mittel nach einem der Ansprüche 1 bis 4, dadurch gekennzeichnet, daß die Rasthaken (5) nach außen vorstehende Verlängerungen (10) aufweisen, mittels derer sie unter Verwendung eines Werkzeuges in die Öffnungsstellung gespannt werden können, wenn das Lenkrad (1) demontiert werden soll.

6. Mittel nach Anspruch 1, jedoch mit der Maßgabe, daß die Rasthaken (5') im Lenkrad (1) gelagert und nach innen vorgespannt sind, und daß sie in montiertem Zustand in eine Hinterschneidung (13) der Lenksäule (2) eingreifen.

7. Mittel nach Anspruch 6, dadurch gekennzeichnet, daß im Lenkrad (1) nutartige Ausnehmungen (12') zur Aufnahme der Rasthaken (5') vorgesehen sind.

8. Mittel nach Anspruch 6 oder 7, dadurch gekennzeichnet, daß die Rasthaken (5') nach außen vorstehende Verlängerungen (10') aufweisen, an denen eine Feder (7') zur Vorspannung der Rasthaken (5') in Schließrichtung angreift und mittels derer die Rasthaken (5') unter Verwendung eines Werkzeuges in die Öffnungsstellung spannbar sind, wenn das Lenkrad (1) demontiert werden soll.

9. Mittel nach einem der Ansprüche 1 bis 8, dadurch gekennzeichnet, daß zwischen einem Bund (9) an der Lenksäule (2) und dem Lenkrad (1) eine Feder (11) angeordnet ist, die beim Aufstecken des Lenkrades (1) auf die Lenksäule (2) gespannt wird und das Lenkrad (1) in montiertem Zustand axial gegen die Rasthaken (5, 5') vorspannt.

10. Mittel zur lösbaren, formschlüssigen, axialen Befestigung eines Lenkrades (1) an einer Lenksäule (2), wobei das Lenkrad (1) auf das obere Ende der Lenksäule (2) aufgesteckt und formschlüssig drehfest gehalten ist, dadurch gekennzeichnet, daß das obere Ende der Lenksäule (2) konisch zugespitzt ist und eine Hinterschneidung (14) aufweist, sowie daß auf der Oberseite des zentralen Bereiches (15) des Lenkrades (1) ein Federstab (16, 17) befestigt ist, der eine zentrale Ausnehmung (3) des Lenkrades (1) sekantenartig überdeckt und der in die Hinterschneidung (14) der Lenksäule (2) eingreift, wenn das Lenkrad (1) auf die Lenksäule (2) aufgesteckt ist und seine axiale Sollposition erreicht hat.

11. Mittel nach Anspruch 10, dadurch gekennzeichnet, daß der Federstab (16) U-förmig ausgebildet ist, daß er mit beiden Schenkeln (16a, 16b) die zentrale Ausnehmung (3) sekantenartig überdeckt und daß er an den Enden der Schenkel (16a, 16b) am zentralen Bereich (15) des Lenkrades (1) befestigt ist.

12. Mittel nach Anspruch 10, dadurch gekennzeichnet, daß der Federstab (17) wie eine Schraubefeder um etwa 270° um einen Befestigungsnocken (18) gebogen ist, mit einem Schenkel (17a) die zentrale Ausnehmung (3) sekantenartig überschneidet und an beiden Schenkein (17a, 17b) am zentralen Bereich (15) des Lenkrades (1) befestigt ist.

13. Mittel nach einem der Ansprüche 10 bis 12, dadurch gekennzeichnet, daß zwischen Lenkrad (1) und Lenksäule (2) eine axial wirkende Feder (17) vorgesehen ist, die beim Aufstecken des Lenkrades (1) gespannt wird und die Rastverbindung zwischen Lenksäule (2) und Lenkrad (1) in montiertem Zustand unter Vorspannung hält.

14. Mittel nach Anspruch 13, dadurch gekennzeichnet, daß eine Schraubenfeder (19) vorgesehen ist, die einen im Lenkrad (1) begrenzt axial verschieblich gelagerten Konusring (20) gegen einen Gegenkonus (21) an der Lenksäule (2) kraftschlüssig andrückt.

15. Mittel nach Anspruch 15, dadurch gekennzeichnet, daß eine Schraubenfeder (22) vorgesehen ist, die einen auf der Lenksäule (2) begrenzt axial verschieblichen Konusring (23) gegen einen Gegenkonus (24) in der Ausnehmung (3) des Lenkrades (1) kraftschlüssig andrückt.

16. Mittel nach einem der Ansprüche 10 bis 15, dadurch gekennzeichnet, daß der Federstab (16, 17) mittels eines Werkzeuges in eine Öffnungsstellung spannbar ist, wenn das Lenkrad (1) demontiert werden soll.

17. Mittel nach einem der Ansprüche 10 bis 16, dadurch gekennzeichnet, daß zwischen Lenkrad (1) und Lenksäule (2) ein Schneidring (25) angeordnet ist.

18. Mittel nach einem der Ansprüche 10 bis 17, dadurch gekennzeichnet, daß das konisch zugespitzte Ende der Lenksäule (2) aus einer abnehmbaren Montagehilfe (26) besteht.
